# EUROPÄISCHE PATENTSCHRIFT

(11) **EP 2 939 521 B1**
(45) Veröffentlichungstag und Bekanntmachung des Hinweises auf die Patenterteilung: **26.07.2017**
(21) Anmeldenummer: 15158973.6
(22) Anmeldetag: 13.03.2015
(51) Int. Cl.: A01D 90/04, A01F 15/10

(54) **Landwirtschaftliche Maschine**
Agricultural machine
Machine agricole

(30) Priorität: 30.04.2014 DE 202014003759 U
(43) Veröffentlichungstag der Anmeldung: 04.11.2015
(73) Patentinhaber: PÖTTINGER Landtechnik GmbH, 4710 Grieskirchen (AT)
(72) Erfinder: Aumayr, Klaus, 4612 Scharten (AT); Zweimüller, Manuel, 4743 Peterskirchen (AT); Voraberger, Alois, 4710 St. Georgen bei Grieskirchen (AT)
(74) Vertreter: Thoma, Michael

(56) Entgegenhaltungen:
- DE-A1-102011 013 242
- DE-A1-102012 008 721
- DE-U1- 9 308 656

## Beschreibung

Die vorliegende Erfindung betrifft eine landwirtschaftliche Maschine, insbesondere ein Form eines Ladewagens und/oder einer Ballenpresse, mit einem Förderotor zum Fördern von Erntegut durch einen Förderkanal, der zu einer Gutsammelkammer wie Pressen- oder Speicherkammer führt, sowie einer Schneidvorrichtung mit mehreren Messern zum Zerschneiden des durch den Förderkanal geförderten Ernteguts, wobei der Förderrotor als Überkopfförderer ausgebildet ist, der Förderkanal oberhalb des Förderrotors über den Förderrotor hinwegführt und die Messer von oben in den Förderkanal hineinhängend angeordnet sind.

Bei Ladewagen und Ballenpressen müssen die Messer, mittels derer das aufgenommene Erntegut zerschnitten wird, regelmäßig nachgeschliffen werden, um einerseits das Erntegut schonend zu zerschneiden, andererseits zu hohe Schnittkräfte und ein Verstopfen des Förderkanals zu vermeiden. Üblicherweise müssen die Messer dabei mehrmals täglich nachgeschliffen werden, zumindest aber kontrolliert werden, ob sie beschädigt oder stumpf sind, vgl. DE 10 2012 008 721 A1 oder DE 93 08 656 U1.

Hierzu können die Messer auf einem schwenkbaren Messerbalken angeordnet werden, so dass sie aus dem Förderkanal heraus in eine Wartungsposition geschwenkt werden können.

Aus der Schrift DE 10 2011 013 242 A1 ist eine Ballenpresse bekannt, bei der der Förderrotor als Überkopfförderer ausgebildet ist und das Erntegut durch den über den Förderrotor hinwegführenden Förderkanal hindurchfördert. Die Schneidmesser hängen hierbei von oben durch die Förderkanalwand hindurch in den Förderkanal hinein.

Durch einen solchen Überkopfförderer muss das vom Boden aufgenommene Erntegut nicht mehr eine s-förmige Förderbahn durchlaufen, da der Pickuprotor und der nachfolgende Förderrotor gleichsinnig umlaufen können. Zudem wird eine günstigere Einlaufrichtung in die Ballenformkammer leicht von oben her schräg nach unten bzw. waagerecht in die Ballenkammer hinein erreicht, sodass insgesamt der Rückstauwiderstand verringert und damit das Erntegutbett leichter gefördert werden kann, was die Schoppergefahr verringert. Trotzdem kann es bei übermäßigem Anschwellen des Fördergutstroms auch hier zum Schoppern kommen.

Bei solchen Überkopfförderern, denen ein Schneidwerk zugeordnet ist, ist es jedoch nicht ganz einfach, die Messer zu warten. Bei einem Nach-oben-herausBewegen der Messer kommen diese im Wesentlichen über der Pickup und meist auch über einer Deichsel bzw. einem Anbauteil zu liegen, mittels derer/dessen die Maschine an einen Schlepper angebaut werden kann, so dass die Zugänglichkeit zu den Messern mehr oder minder behindert ist. Zudem ist der Bereich oberhalb des Förderrotors/der Pickup oft auch durch seitlich angeordnete Aufhängungs- und Antriebsteile für den Förderrotor bzw. die Pickup weiter verbaut, so dass der Zugang von der Seite her weiter erschwert ist.

Hiervon ausgehend liegt der vorliegenden Erfindung die Aufgabe zugrunde, eine verbesserte landwirtschaftliche Maschine der genannten Art zu schaffen, die Nachteile des Standes der Technik vermeidet und Letzteren in vorteilhafter Weise weiterbildet. Vorzugsweise soll die Schneideinrichtung trotz Ausbildung des Förderrotors als Überkopfförderer und an sich ungünstigen Platzverhältnissen bei solchen Überkopfförderern für Wartungsarbeiten eine ergonomisch günstige, einfach zugängliche Messerpositionierung ermöglichen.

Diese Aufgabe wird erfindungsgemäß durch eine landwirtschaftliche Maschine nach Anspruch 1 gelöst. Bevorzugte Ausgestaltungen der Erfindung sind Gegenstand der abhängigen Ansprüche.

Es wird also vorgeschlagen, die Wartung der Schneidvorrichtung und deren Messer nicht mehr über dem Überkopfförderer und dessen Förderkanal und dem dort zum Maschinenrahmen führenden Deichsel- bzw. Anbaurahmenteil auszuführen, sondern an die Seite der Erntemaschine zu verlegen, wo der verfügbare Platz weniger beschränkt ist. Die Wartungsposition wird am seitlichen Maschinenrand vorgesehen und die Messer dorthin verfahren. Erfindungsgemäß sind die Messer der Schneidvorrichtung quer zur Förderrichtung des Förderkanals in eine Wartungsposition in den genannten seitlichen Randbereich hinein verfahrbar gelagert sind. Hierdurch wird unmittelbar vor bzw. über dem Förderkanal bzw. über dem Deichsel- bzw. Anbaurahmenbereich und dem Chassis bzw. der dort üblicherweise vorgesehen Pick-Up kein Arbeitsraum für die Wartung benötigt, zudem sind die seitlich ausgefahrenen Messer sowohl von vorne wie von hinten einfach zugänglich.

In Weiterbildung der Erfindung kann eine Schleifvorrichtung in Fahrtrichtung der Maschine betrachtet bzw. in Förderrichtung durch den Förderkanal betrachtet seitlich neben dem Förderkanal und/oder seitlich neben dem an den Förderkanal anschließenden Maschinen- bzw. Chassisabschnitt angeordnet sein, wobei die Schleifvorrichtung über die Breite des Förderkanals bzw. des daran anschließenden Maschinenabschnitts seitlich vorspringen kann. Alternativ kann die seitlich herausgefahrene Stellung der Messer aber auch nur zur manuellen Wartung, Inspektion oder zum Messertausch genutzt werden.

Vorteilhafterweise können alle Messer auf dieselbe Seite der Maschine herausgefahren werden, so daß auf der gegenüberliegenden Seite andere Maschinenkomponenten wie Antriebsteile, Steuerungskomponenten und dgl. fest positioniert werden können, ohne mit der Schneidvorrichtung beim Herausfahren zu kollidieren. Grundsätzlich wäre es aber auch möglich, einen Teil der Messer auf die eine Seite der Erntemaschine herauszufahren, während ein anderer Teil der Messer auf die gegenüberliegende Seite herausgefahren werden kann, was mittels eines geteilten, vorzugsweise balkenförmigen Messerträgers bewerkstelligt werden kann, an dem die Messer der Schneidvorrichtung in an sich bekannter Weise gelagert sind.

Werden vorteilhafterweise alle Messer auf dieselbe Seite herausgefahren, kann der Messerträger einteilig ausgebildet sein, wobei aber auch mit einer zwei- oder mehrteiligen Ausbildung zur selben Seite herausgefahren werden könnte. Der genannte Messerträger umfasst vorteilhafterweise zumindest ein Trägerteil, das auf die eine Seite der Erntemaschine seitlich herausgefahren werden kann.

Die bewegliche Lagerung des vorzugsweise balkenförmigen Messerträgers bzw. dessen Trägerabschnitt kann grundsätzlich verschieden ausgebildet sein. Das seitliche Herausfahren quer zur Fahrtrichtung der Erntemaschine bzw. quer zu einer vertikalen Ebene, die die Förderrichtung durch den Förderkanal enthält, kann nach einer vorteilhaften Ausführung der Erfindung mittels einer Schiebeführung bewerkstelligt sein, durch die der Messerträger seitlich unter der Erntemaschine zu deren seitlichen Randbereich herausschiebbar ist. Alternativ oder zusätzlich kann der Messerträger bzw. der entsprechende Trägerabschnitt mittels einer Lenkeranordnung, beispielsweise in Form einer Viergelenks-Lenkeranordnung, seitlich herausgefahren werden.

Vorteilhafterweise umfasst die bewegliche Lagerung des balkenförmigen Messerträgers bzw. dessen Trägerabschnitte mehrere Freiheitsgrade bzw. mehrere Beweglichkeiten. Um die Messer zunächst aus dem Förderkanal herausfahren zu können, kann die bewegliche Lagerung einen ersten Verfahrweg für die Messer vorsehen, der in einer aufrechten, die Förderrichtung des Förderkanals enthaltenden Bewegungsebene verläuft. Insbesondere können die Messer zunächst nach vorne und/oder oben aus dem Förderkanal herausgefahren, insbesondere um eine liegende Querachse herausgeschwenkt werden. Sind die Messer aus dem Förderkanal herausgefahren, kann der Messerträger zusammen mit den daran gelagerten Messern quer zu der genannten aufrechten Bewegungsebene seitlich in den Randbereich herausgefahren werden, in dem die Schleifvorrichtung angeordnet ist.

Vorteilhafterweise können zur Bewegung der Messer bzw. des Messerbalkens den genannten Freiheitsgraden fremdenergiebetätigte Stellaktoren zugeordnet sein. Insbesondere kann die Herausschwenkbewegung der Messer um die liegende, quer zur Fahrtrichtung ausgerichtete Schwenkachse mittels eines entsprechenden Schwenkantriebs erfolgen, beispielsweise in Form von Druckmittelzylindern, die sich einerseits an einem rahmenfesten Teil abstützen und andererseits von der Schwenkachse beabstandet an einem Schneidvorrichtungsteil, beispielsweise einem mit dem Messerträger verbundenen Schwenkarm verbunden sein können.

Die seitliche Herausschiebebewegung kann beispielsweise manuell erfolgen, wobei auch hier der zuvor genannten Schiebeführung ein Stellaktor zugeordnet sein kann, beispielsweise in Form einer Stellspindel oder eines Druckmittelzylinders.

Um die seitliche Herausfahrbewegung zu ermöglichen, kann der zuvor genannte Stellaktor zum Herausschwenken der Messer um die liegende Schwenkachse von der Schneidvorrichtung abkuppelbar sein, um die seitliche Schiebebewegung nicht zu behindern.

Die Erfindung wird nachfolgend anhand bevorzugter Ausführungsformen und zugehöriger Zeichnungen näher erläutert. In den Zeichnungen zeigen:
- Fix. 1:: eine perspektivische, ausschnittsweise Seitenansicht einer landwirtschaftlichen Maschine, die in Form eines Ladewagens oder einer Ballenpresse ausgebildet sein kann, wobei eine Aufnahmevorrichtung in Form einer Pickup, ein nachgeordneter als Überkopfförderer ausgebildeter Förderrotor und eine Schneidvorrichtung in Arbeitsstellung dargestellt sind,
- Fig. 2:: eine perspektivische, ausschnittsweise Seitenansicht der landwirtschaftlichen Maschine aus Figur 1, wobei die Schneidvorrichtung in einer ausgeschwenkten Nicht-Schneidstellung gezeigt ist, in der die Scheidvorrichtung aber noch nicht seitlich ausgefahren ist,
- Fig. 3:: eine perspektivische, ausschnittsweise Seitenansicht der landwirtschaftlichen Maschine aus Figur 1, wobei die Schneidvorrichtung in einer ausgeschwenkten Nicht-Schneidstellung gezeigt ist, in der die Scheidvorrichtung seitlich in die seitliche Wartungsstellung ausgefahren ist,

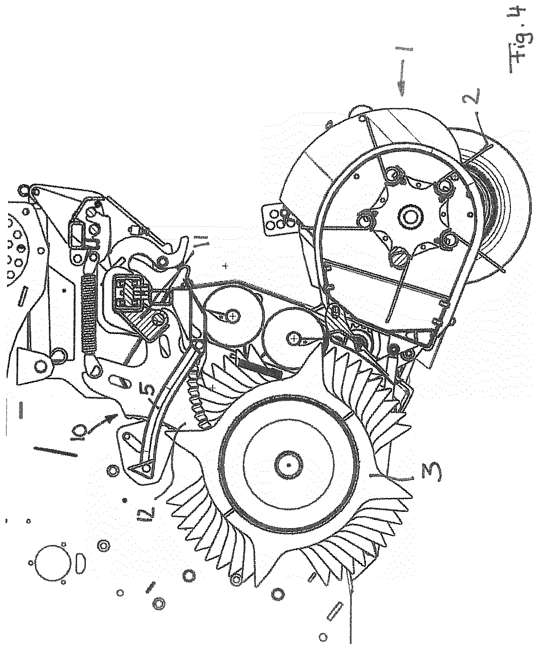

- Fig. 4:: eine ausschnittsweise Seitenansicht der landwirtschaftlichen Maschine aus den vorhergehenden Figuren, die deren Gutaufnehmer und den stromab angeordneten Förderrotor zeigt, wobei der Förderrotor als Überkopfförderer ausgebildet ist und ein sich oberhalb des Förderrotors über den Förderrotor hinweg erstreckender Förderkanal von einem oberhalb des Förderrotors angeordneten Förderkanalwand begrenzt wird, durch die hindurch die in ihrer Schneidstellung gezeigten Messer der Schneidvorrichtung in den Förderkanal hineinhängen, und

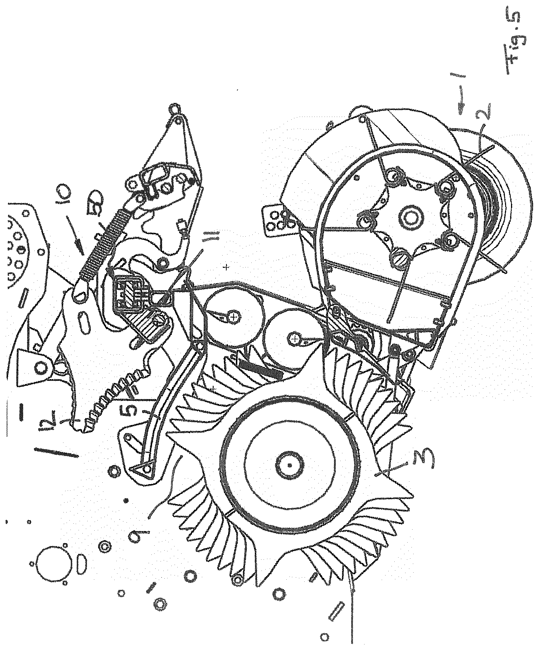

- Fig. 5:: eine ausschnittsweise Seitenansicht der landwirtschaftlichen Maschine ähnlich Figur 4, wobei die Schneidmesser in ihrer aus dem Förderkanal nach vorne/oden herausgeschwenkten Stellung gezeigt sind.

Wie die Figuren zeigen, kann die landwirtschaftliche Maschine, die bspw. als Ladewagen oder Ballenpresse ausgebildet sein kann, einen Gutaufnehmer 1 zum Aufsammeln von Erntegut vom Boden umfassen, der bspw. eine rotierendantreibbare Stachelwalze 2 umfassen kann. Die genannte Stachelwalze 2 kann Teil einer Pickup sein, die in an sich bekannter Weise über den Boden geführt werden kann, bspw. durch Stützräder oder andere Höhenführungsmittel.

Dem genannten Gutaufnehmer 1 ist ein Förderrotor 3 nachgeordnet, der in an sich bekannter Weise Mitnehmerzinken über seinen Umfang verteilt aufweisen kann. Der genannte Förderrotor 3 ist dabei als Überkopfförderer ausgebildet sein, wobei sich ein Förderkanal 9, durch den hindurch der Förderrotor 3 das vom Gutaufnehmer 1 kommende Gut hindurchfördert, oberhalb des Förderrotors 3 über diesen hinweg erstrecken kann.

Der Förderrotor 3 und die Stachelwalze 2 des Gutaufnehmers können gleichsinnig rotierend angetrieben werden, sodass der aufgenommene Erntegutstrom nicht s-förmig um die Stachelwalze 2 und Förderrotor 3 herumgeschlungen, sondern über die Stachelwalze 3 und daran anschließend über den Förderrotor 3 hinweggefördert wird.

Der über dem Förderrotor 3 liegende Förderkanal 9 wird zumindest abschnittsweise nach oben hin durch eine Förderkanalwand 5 begrenzt, die als Leitblech ausgebildet sein kann. Die genannte Förderkanalwand 5 kann zumindest näherungsweise bogenförmig gekrümmt der Umfangsrichtung des Förderrotors 3 folgen.

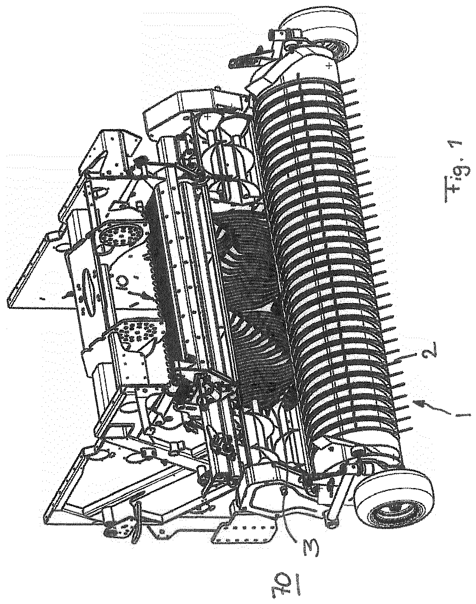

Wie Figur 1 zeigt, kann sich die Förderkanalwand 5 bspw. über einen Sektor des Förderrotors 3 über einen Winkelbereich von etwa 30° bis 60° erstrecken, wobei jedoch auch längere oder kürzere Ausbildungen der Förderkanalwand vorgesehen sein können. Die Förderkanalwand 5 kann sich bspw. in einem Sektorabschnitt von etwa 10 Uhr bis 12 Uhr erstrecken und/oder einem Abschnitt der oberen Hälfte des Förderrotors 3 zugeordnet sein, der auf der dem Gutaufnehmer 1 zugewandten Hälfte des Förderrotors liegt.

Der Förderrotor 3 kann das Erntegut durch den Förderkanal 9 hindurch in eine Gutsammelkammer, beispielsweise eine Ballenformkammer oder einen Erntegutspeicher fördern.

An dem Förderkanal 9 ist eine Schneidvorrichtung 10 vorgesehen, die einen liegend quer angeordneten Messerbalken 11 umfasst, der eine Vielzahl von in Reihe nebeneinander angeordneten Messern 12 trägt, die von oben her durch die Decke bzw. die genannte Förderkanalwand 5 des genannten Förderkanals 9 hindurchtreten und in den Förderkanal 9 hineinragen, so dass das durch den Förderrotor 3 durch den Förderkanal 9 hindurch geförderte Erntegut geschnitten wird.

Um die genannten Messer 12 schleifen und/oder warten und/oder austauschen zu können, kann der Messerbalken 11 oder ein Trägerabschnitt des Messerbalkens zunächst in einem ersten Bewegungsschritt angehoben oder geschwenkt werden, so dass die Messer 12 außerhalb des Förderkanals 9 im Wesentlichen oberhalb der Förderkanalwand 5 bzw. oberhalb der Decke des Förderkanals 9 zu liegen kommen.

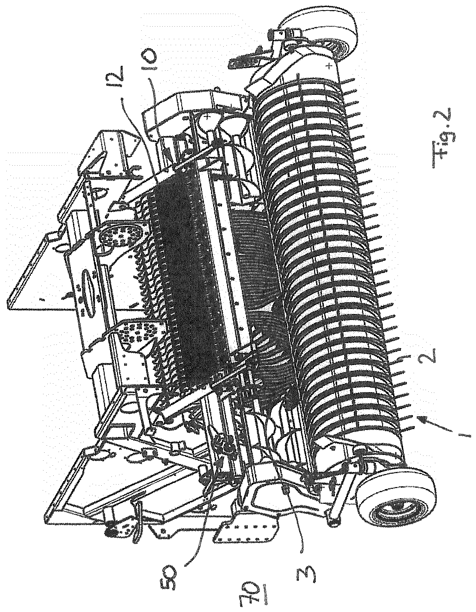

Dieses in Fig. 2 verdeutlichte Herausschwenken der Messer nach vorne/nach oben kann mittels eines Stellaktors 13 erfolgen, der beispielsweise in Form zweier Hydraulikzylinder ausgebildet sein kann, die sich einerseits an einem rahmenfesten Anlenkpunkt abstützen und andererseits an einem mit dem Messerbalken 12 verbundenen Schwenkteil 14. Um den Messerbalken 11 nachfolgend seitlich herausfahren zu können, können die genannten Hydraulikzylinder 13 bzw. der Stellaktor von dem genannten Schwenkteil bzw. dem Messerbalken 11 abgekuppelt werden, nachdem die in Fig. 2 gezeigte Nicht-Schneidstellung erreicht ist.

In einem zweiten Bewegungsschritt kann der genannte Messerbalken sodann im Wesentlichen parallel zur Längsachse des Messerbalkens und damit quer zur Fahrtrichtung der Maschine seitlich in eine Schleifposition herausgefahren werden, so dass zumindest das jeweils zu schleifende Messer 12 seitlich neben dem Korpus der Maschine 1 bzw. seitlich der Aufnahmevorrichtung und des daran anschließenden Förderkanals 9 zu liegen kommt.

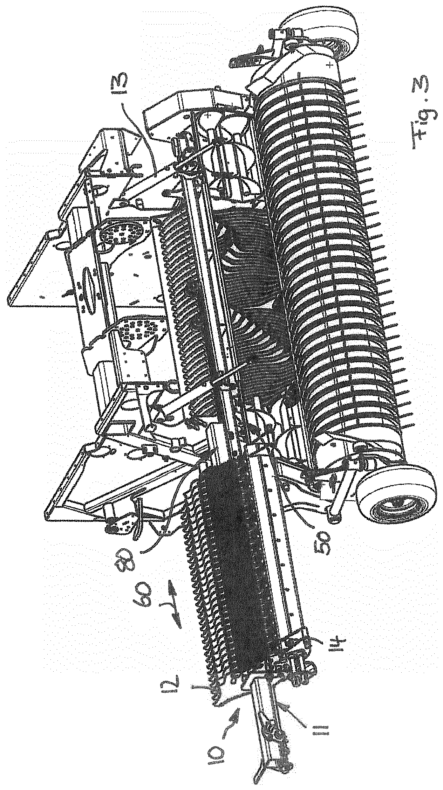

Um den ersten Bewegungsschritt ausführen zu können, kann der Messerbalken 12 beispielsweise um eine liegende Querachse heraufgeklappt bzw. -geschwenkt werden. Alternativ oder zusätzlich können die Messer 12 relativ zum Messerbalken 11 entsprechend verschwenkbar sein. Um den genannten zweiten Bewegungsschritt ausführen zu können, kann beispielsweise die in Fig. 3 gezeigte Schiebeführung 50 vorgesehen sein, die entsprechend dem Bewegungspfeil 60 eine Bewegungsrichtung in einer liegenden Ebene quer zur Fahrtrichtung besitzt, so dass der Messerbalken 11 seitlich herausgeschoben werden kann.

## Patentansprüche

1. Landwirtschaftliche Maschine, insbesondere in Form eines Ladewagens und/oder einer Ballenpresse, mit einem Förderotor (3) zum Fördern von Erntegut durch einen Förderkanal (9), der zu einer Gutsammelkammer wie Pressen- oder Speicherkammer führt, sowie einer Schneidvorrichtung (10) mit mehreren Messern (12) zum Zerschneiden des durch den Förderkanal (9) geförderten Ernteguts, wobei die Messer (12) auf einem vorzugsweise balkenförmigen Messerträger (11) angeordnet sind, wobei der Förderrotor (3) als Überkopfförderer ausgebildet ist, der Förderkanal (9) oberhalb des Förderrotors (3) über den Förderrotor hinwegführt und die Messer von oben in den Förderkanal hineinhängend angeordnet sind, **dadurch gekennzeichnet, dass** eine Wartungsstellung zum Warten der Messer (12) in einem seitlichen Randbereich (70) der Maschine vorgesehen ist und die Messer (12) der Schneidvorrichtung (10) quer zur Förderrichtung des Förderkanals (9) in die Wartungsposition in den genannten seitlichen Randbereich (70) hinein verfahrbar gelagert sind, wobei der Messerträger (11) durch eine bewegliche Lagerung (80) über den Förderkanal (9) und/oder über einer Förderrotoraufhängung seitlich heraus in den genannten Randbereich (70) verfahrbar gelagert ist.

2. Landwirtschaftliche Maschine nach dem vorhergehenden Anspruch, wobei der seitliche Randbereich (70) in Fahrtrichtung der Maschine betrachtet rechts und/oder links neben dem Förderkanal (9) und/oder einem daran anschließenden Maschinenkorpus- oder Chassisabschnitt liegt.

3. Landwirtschaftliche Maschine nach einem der vorhergehenden Ansprüche, wobei der Messerträger (11) mit allen Messern (12) zur selben Seiten der Landwirtschaftliche Maschine herausfahrbar gelagert ist.

4. Landwirtschaftliche Maschine nach einem der vorhergehenden Ansprüche, wobei die bewegliche Lagerung (80) des Messerträgers (11) einen ersten Verfahrweg zum Herausfahren der Messer (12) aus dem Förderkanal (9) in eine aufrechte, die Förderrichtung des Förderkanals (9) enthaltende Bewegungsebene und einen zweiten Verfahrweg quer zur genannten Bewegungsebene zum Herausfahren des Messerträgers (11) in den seitlichen Randbereich (70) aufweist.

5. Landwirtschaftliche Maschine nach dem vorhergehenden Anspruch, wobei die bewegliche Lagerung (80) eine vorzugsweise lineare Schiebeführung (50) zur verschieblichen Führung des Messerträgers (11) entlang des zweiten Verfahrwegs sowie eine Schwenklagerung zum Herausschwenken der Messer (12) aus dem Förderkanal (9) entlang des ersten Verfahrwegs aufweist.

6. Landwirtschaftliche Maschine nach einem der beiden vorhergehenden Ansprüche, wobei dem Messerträger (11) ein Stellaktor (13) zum Bewegen der Messer (12) und/oder des Messerträgers (11) bezüglich des vorgenannten ersten Verfahrwegs zugeordnet ist, wobei der genannte Stellaktor (13) vorzugsweise von der Schneidvorrichtung (10) abkuppelbar ist, so dass die Schneidvorrichtung (10) bei abgekuppeltem Stellaktor entlang des zweiten Verfahrwegs seitlich herausfahrbar ist.

## Claims

1. An agricultural machine, in particular in the form of a self-loading wagon and/or of a baler, having a conveyor rotor (3) for conveying harvest through a conveying passage (9) that leads to a produce collection chamber such as a press chamber or a storage chamber and having a cutting apparatus (10) comprising a plurality of blades (12) for cutting up the harvest conveyed through the conveying passage (9) wherein the blades (12) are arranged on a preferably bar-shaped blade carrier (11); and wherein the conveyor rotor (3) is configured as an overhead conveyor, the conveying passage (9) is led beyond the conveyor rotor above the conveying rotor (3), and the blades are arranged hanging into the conveyor passage from above, **characterized in that** a servicing position for servicing the blades (12) is provided in a lateral marginal region (70) of the machine and the blades (12) of the cutting apparatus (10) are supported movably transversely to the conveying direction of the conveying passage (9) into the servicing position in the said lateral marginal region (70), with the blade carrier (11) being movable laterally by a movable support (80) over the conveying passage (9) and/or beyond a conveyor rotor suspension into the said marginal region (70).

2. An agricultural machine in accordance with the preceding claim, wherein the lateral marginal region (70) is disposed, viewed in the direction of travel of the machine, to the right and/or left next to the conveying passage (9) and/or next to a machine body section or chassis section adjoining it.

3. An agricultural machine in accordance with one of the preceding claims, wherein the blade carrier (11) with all its blades (12) is supported movable outwardly to the same sides of the agricultural machine.

4. An agricultural machine in accordance with one of the preceding claims, wherein the movable support (80) of the blade carrier (11) has a first travel path for moving the blades (12) out of the conveying passage (9) into an upright movement plane including the conveying direction of the conveying passage (9) and a second travel path transversely to the said movement plane for moving out the blade carrier (11) into the lateral marginal region (70).

5. An agricultural machine in accordance with the preceding claim, wherein the movable support (80) has a preferably linear sliding guide (50) for the displaceable guidance of the blade carrier (11) along the second travel path and a pivot support for outwardly pivoting the blades (12) out of the conveying passage (9) along the first travel path.

6. An agricultural machine in accordance with one of the two preceding claims, wherein an adjustment actuator (13) for moving the blades (!2) and/or the blade carrier (11) with respect to the aforesaid first travel path is associated with the blade carrier (11), with the said adjustment actuator (13) preferably being decouplable from the cutting apparatus (10) such that the cutting apparatus (10) can be laterally moved out along the second travel path with a decoupled adjustment actuator.

## Revendications

1. Machine agricole, en particulier sous la forme d'un véhicule de chargement et/ou d'une botteleuse, comprenant un rotor de transport (3) destiné à transporter du produit de la récolte par un canal de transport (9), qui conduit à une chambre collectrice de produit telle qu'une chambre de presse ou de stockage, ainsi qu'un dispositif de coupe (10) doté de plusieurs lames (12) pour découper le produit de la récolte transporté par le canal de transport (9), les lames (12) étant disposées sur un porte-lames (11) de préférence en forme de poutre, le rotor de transport (3) se présentant sous la forme d'un transporteur à alimentation par le haut, le canal de transport (9) conduisant au-dessus du rotor de transport (3) par-dessus le rotor de transport et les lames étant disposées suspendues par le haut dans le canal de transport, **caractérisée en ce que** une position de maintenance pour la maintenance des lames (12) est prévue dans une zone de bord latérale (70) de la machine et les lames (12) du dispositif de coupe (10) sont montées de manière à pouvoir être déplacées transversalement au sens de transport du canal de transport (9) dans la position de maintenance dans ladite zone de bord latérale (70), le porte-lames (11) étant monté de manière à pouvoir être sorti latéralement au moyen d'un logement mobile (80) au-dessus du canal de transport (9) et/ou au-dessus d'une suspension de rotor de transport dans ladite zone de bord (70).

2. Machine agricole selon la revendication précédente, dans laquelle la zone de bord latérale (70) se trouve, vue dans le sens de la marche de la machine, à droite et/ou à gauche à côté du canal de transport (9) et/ou d'une partie de corps de machine ou de châssis adjacente à celui-ci.

3. Machine agricole selon l'une des revendications précédentes, dans laquelle le porte-lames (11) est monté de manière à pouvoir être sorti avec toutes les lames (12) du même côté de la machine agricole.

4. Machine agricole selon l'une des revendications précédentes, dans laquelle le logement mobile (80) du porte-lames (11) comporte un premier chemin de déplacement pour sortir les lames (12) hors du canal de transport (9) dans un plan de mouvement vertical contenant le sens de transport du canal de transport (9) et un second chemin de déplacement transversal audit plan de mouvement pour sortir le porte-lames (11) dans la zone de bord latérale (70).

5. Machine agricole selon la revendication précédente, dans laquelle le logement mobile (80) comporte un guidage coulissant (50) de préférence linéaire pour le guidage coulissant du porte-lames (11) le long du second chemin de déplacement ainsi qu'un logement pivotant pour le pivotement des lames (12) hors du canal de transport (9) le long du premier chemin de déplacement.

6. Machine agricole selon l'une des deux revendications précédentes, dans laquelle un actionneur de réglage (13) est associé au porte-lames (11) pour le déplacement des lames (12) et/ou du porte-lames (11) par rapport audit premier chemin de déplacement, ledit actionneur de réglage (13) pouvant de préférence être découplé du dispositif de coupe (10), de telle sorte que le dispositif de coupe (10) peut être sorti latéralement le long du second chemin de déplacement lorsque l'actionneur de réglage est découplé.
